# EUROPÄISCHE PATENTSCHRIFT

(11) **EP 2 063 673 B1**
(45) Veröffentlichungstag und Bekanntmachung des Hinweises auf die Patenterteilung: **09.05.2018**
(21) Anmeldenummer: 08019992.0
(22) Anmeldetag: 17.11.2008
(51) Int. Cl.: H04W 4/08, H04W 8/18, H04M 3/56, H04W 4/14, H04W 4/06, H04M 3/42

(54) **Gruppenkommunikation in Telekommunikationsnetzen**
Group communication in telecommunication networks
Communication de groupes dans des réseaux de télécommunication

(30) Priorität: 21.11.2007 DE 102007056157
(43) Veröffentlichungstag der Anmeldung: 27.05.2009
(73) Patentinhaber: Vodafone Holding GmbH, 40213 Düsseldorf (DE)
(72) Erfinder: Hartl, Mike, 45478 Mülheim (DE); Bieniek, Rainer, 47178 Duisburg (DE)
(74) Vertreter: Ring & Weisbrodt

(56) Entgegenhaltungen:
- DE-A1- 10 224 905
- US-A1- 2005 091 380
- US-A1- 2006 067 502
- US-A1- 2006 250 987

## Beschreibung

Die vorliegende Erfindung betrifft ein Verfahren gemäß Anspruch 1 sowie ein Telekommunikationsnetz, vorzugsweise ein Mobilfunknetz gemäß einem GSM-, GPRS- und/oder UMTS-Funknetzstandard, gemäß Anspruch 15. Im Stand der Technik sind verschiedene Systeme, Verfahren und Vorrichtungen für eine Gruppenkommunikation zwischen Teilnehmern in Telekommunikationsnetzen, insbesondere Mobilfunknetzen gemäß einem GSM-(GSM: Global System for Mobile Communications), GPRS- (General Packet Radio Service) und/oder UMTS-Funknetzstandard (UMTS: Universal Mobile Telecommunications System) bekannt. Nachteilig bei den bisher bekannten Systemen, Verfahren und Vorrichtungen für eine Gruppenkommunikation zwischen Teilnehmern in Telekommunikationsnetzen ist insbesondere der Aufbau einer entsprechenden Gruppenkommunikation zwischen den Teilnehmern, welcher umfangreiche und mitunter schwierig zu handhabende Eingaben von den jeweiligen Gruppenmitgliedern erfordert. Der Aufbau einer entsprechenden Gruppenkommunikation ist dementsprechend hinsichtlich der Handhabung und/oder Nutzung bedienungsunfreundlich und unkomfortabel. Ein solches Verfahren ist in US 2006/250987 offenbart.

Der Erfindung liegt in Anbetracht dieses Standes der Technik die Aufgabe zu Grunde, die Gruppenkommunikation zwischen Teilnehmern in Telekommunikationsnetzen zu verbessern, insbesondere so, dass ohne Änderungen seitens der von Nachrichtensendern und/oder Nachrichtenempfängern genutzten Endgeräte auf einfache und kostengünstige Art und Weise der Aufbau einer Gruppenkommunikation zwischen Teilnehmern in Telekommunikationsnetzen realisierbar ist.

Zur technischen Lösung wird mit der vorliegenden Erfindung ein Verfahren zum Aufbau einer Gruppenkommunikation zwischen Teilnehmern in Telekommunikationsnetzen, wobei Teilnehmer zumindest zu Gruppenkommunikationszwecken telekommunikationsnetzseitig als Mitglieder einer Gruppe zusammenfassbar sind, mit wenigstens einer Datenbank mit wenigstens eine Information zur Kontaktierung von möglichen Gruppenmitgliedern in einem Telekommunikationsnetz (Kontaktierungsinformation) aufweisenden Datenbankeinträgen und wenigstens einer Einrichtung zur Zusammenstellung und/oder Koordination von Gruppenmitgliedern zu und/oder in einer Gruppe (Gruppierungseinrichtung), vorgeschlagen, welches dadurch gekennzeichnet ist, dass die Gruppierungseinrichtung eine Information zur zumindest telekommunikationsnetzseitigen Gruppierung von Gruppenmitgliedern zu einer Gruppe (Gruppierungsinformation) erzeugt und der Gruppierungsinformation zumindest in der wenigstens einen Datenbank die wenigstens eine Kontaktierungsinformation von Gruppenmitgliedern der Gruppe im Telekommunikationsnetz zugeordnet wird, wobei die Gruppierungsinformation eine eine Konferenzschaltung für eine Sprachkommunikation zwischen Gruppenmitgliedern der Gruppe ermöglichende Information zur Kontaktierung der Gruppe in dem Telekommunikationsnetz (Gruppenkontaktierungsinformation) ist und die Konferenzschaltung durch Anwahl der Gruppenkontaktierungsinformation der Gruppierungsinformation im Telekommunikationsnetz durch wenigstens ein Gruppenmitglied der Gruppe initiiert wird.

Eine vorteilhafte Ausgestaltung der Erfindung sieht vor, dass die Konferenzschaltung automatisch durch eine seitens einer Recheneinrichtung des Telekommunikationsnetzes ausgeführte Anwendung initiiert wird, wobei die Anwendung von dem wenigstens einen Gruppenmitglied der Gruppe mittels eines über ein Kommunikationsnetz erfolgenden Dialogs zumindest hinsichtlich Zeitpunkt und/oder hinsichtlich der an der Konferenzschaltung beteiligten Gruppenmitglieder der Gruppe steuerbar ist. Die erfindungsgemäß vorgesehene Anwendung ermöglicht dabei vorteilhafterweise auf besonders einfache und komfortable Art und Weise eine Steuerung der Konferenzschaltung durch ein und/oder mehrere Gruppenteilnehmer beziehungsweise Gruppenmitglieder.

Vorteilhafterweise wird zumindest die Initiierung der Konferenzschaltung den an der Konferenzschaltung beteiligten Teilnehmern beziehungsweise Gruppenmitgliedern der Gruppe (Nachrichtensender und/oder Nachrichtenempfänger) signalisiert, vorzugsweise mittels einer den an der Konferenzschaltung beteiligten Gruppenmitgliedern der Gruppe über das Telekommunikationsnetz gesendeten Nachricht eines Nachrichtendienstes des Telekommunikationsnetzes. Die Gruppenmitglieder der Gruppe (Nachrichtensender und/oder Nachrichtenempfänger), denen die Initiierung der Konferenzschaltung signalisiert wurde, nehmen vorteilhafterweise durch Anwahl der Gruppenkontaktierungsinformation der Gruppierungsinformation im Telekommunikationsnetz an der Konferenzschaltung teil.

Eine weitere vorteilhafte Ausgestaltung der Erfindung sieht vor, dass mit und/oder nach Initiierung der Konferenzschaltung die an der Konferenzschaltung beteiligten Teilnehmer beziehungsweise Gruppenmitglieder der Gruppe (Nachrichtensender und/oder Nachrichtenempfänger) angerufen werden. Vorteilhafterweise wird der Anruf von an der Konferenzschaltung beteiligten Gruppenmitgliedern der Gruppe dem jeweiligen Gruppenmitglied der Gruppe vor dem Anruf signalisiert. Dabei nimmt das Gruppenmitglied durch eine Eingabe den Anruf an oder lehnt diesen ab.

Vorteilhafterweise ist die Gruppierungsinformation ein alphanumerisches Zeichen umfassend wenigstens eine Ziffer, wenigstens einen Buchstaben und/oder wenigstens ein Sonderzeichen.

Das Telekommunikationsnetz ist vorzugsweise ein Mobilfunknetz gemäß einem GSM-, GPRS- und/oder UMTS-Funknetzstandard. Die Gruppenkontaktierungsinformation ist dabei vorteilhafterweise eine Rufnummer in dem Mobilfunknetz, vorzugsweise eine sogenannte MSISDN (MSISDN: Mobile Subscriber ISDN; ISDN: Integrated Services Digital Network).

Eine weitere vorteilhafte Ausgestaltung der Erfindung sieht eine Nutzung der Gruppierungsinformation zur Abrechnung von Nutzungen der Konferenzschaltung vor, vorzugsweise für eine gebührenreduzierte Abrechnung von Nutzungen der Konferenzschaltung. Vorteilhafterweise wird so ein weiterer Anreiz zur Nutzung einer erfindungsgemäßen Gruppenfunktionalität in Telekommunikationsnetzen sowohl für entsprechende Dienstanbieter, insbesondere sogenannte Provider wie Mobilfunknetzbetreiber, als auch den Nutzern des Dienstes gegeben.

Eine besonders bevorzugte Ausgestaltung der Erfindung ist gekennzeichnet durch einen im Rahmen der Erzeugung der Gruppierungsinformation zwischen dem Telekommunikationsnetzwerk und wenigstens einem Gruppenmitglied der Gruppe erfolgenden Dialog zum Aufbau und/oder zur Administrierung der Gruppierung. Vorteilhafterweise erfolgt der Dialog über eine Webschnittstelle (Web-Interface) mittels Fernbedienung, vorzugsweise mittels eines Prozedur-Femaufrufs (RPC: Remote-Procedure-Call) gemäß einem Client-Server-Prinzip. In einer weiteren Ausgestaltung der Erfindung erfolgt der Dialog mittels eines Nachrichtendienstes des Telekommunikationsnetzes, vorzugsweise mittels eines Kurzmitteilungsdienstes (SMS: Short Message Service).

In einer besonders vorteilhaften Ausgestaltung der Erfindung ist vorgesehen, dass der Teilnehmer einer Gruppenkommunikation ein in dem Telekommunikationsnetz betreibbares Endgerät und/oder eine seitens eines in einem Telekommunikationsnetz betreibbaren Endgerätes laufende Anwendung ist und/oder bereitgestellt wird.

Zur technischen Lösung der eingangs genannten Aufgabe wird mit der vorliegenden Erfindung ferner ein Netzknoten in einem Telekommunikationsnetz, vorzugsweise einem Mobilfunknetz gemäß einem GSM-, GPRS- und/oder UMTS-Funknetzstandard, welcher zumindest an dem Aufbau einer Gruppenkommunikation in dem Telekommunikationsnetz beteiligt ist vorgeschlagen, wobei der Netzknoten ausgebildet und/oder eingerichtet ist, ein erfindungsgemäßes Verfahren zum Aufbau einer Gruppenkommunikation zwischen Teilnehmern in Telekommunikationsnetzen zumindest teilweise auszuführen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung eine erfindungsgemäße Übermittlung von Nachrichten in einem Telekommunikationsnetz;
- Fig. 2: in einer schematischen Prinzipdarstellung ein Ausführungsbeispiel eines Dialogs zwischen einem Nachrichtensender und einem Telekommunikationsnetz im Rahmen eines erfindungsgemäßen Aufbaus einer Gruppenkommunikation zwischen Teilnehmern;
- Fig. 3: in einer schematischen Prinzipdarstellung ein Ausführungsbeispiel einer Nachrichtenübermittlung im Rahmen einer erfindungsgemäßen Nachrichtenübermittlung und
- Fig. 4: in einer schematischen Prinzipdarstellung ein Ausführungsbeispiel einer Nachrichtenübermittlung im Rahmen eines erfindungsgemäßen Aufbaus einer Gruppenkommunikation zwischen Teilnehmern.

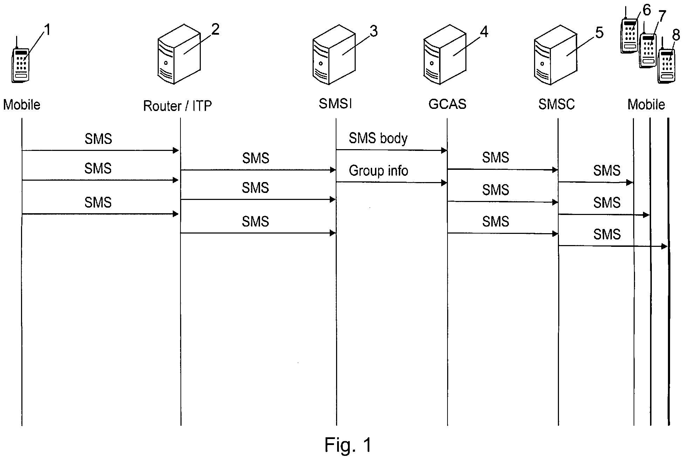

Fig. 1 zeigt das Endgerät 1 eines Nachrichtensenders 1 sowie Endgeräte 6, 7, und 8 von Nachrichtenempfängern 6, 7 und 8 in einem Telekommunikationsnetz 13, vorliegend einem Mobilfunknetz 13 gemäß einem GSM-, GPRS- und/oder UMTS-Funknetzstandard. Die Endgeräte 1, 6, 7 und 8 sind vorliegend in dem Mobilfunknetz 13 betreibbare mobile Endgeräte in Form von Mobilfunktelefonen. Ferner zeigt Fig. 1 seitens des Mobilfunknetzes 13 für die Übermittlung von Nachrichten in dem beziehungsweise über das Mobilfunknetz 13 vorgesehene und eingerichtete Einrichtungen 2, 3, 4 und 5 des Mobilfunknetzes 13, vorliegend einen Router/ITP 2, eine Recheneinrichtung 3, vorliegend SMSI genannt (SMSI: SMS Interception; SMS: Short Message Service), zur Detektierung einer Gruppennachricht, eine Recheneinrichtung 4, vorliegend GCSA genannt (GCAS: GroupCom Application Server), zur Erzeugung einer Gruppierungsinformation und Versehung des Inhalts einer zu übermittelnden Nachrichten mit der Gruppierungsinformation und einer Vermittlungseinrichtung SMSC 5. Die Einrichtungen 2, 3, 4 und 5 können dabei als separate Einrichtungen und/oder als eine Einrichtung von einer Recheneinrichtung realisiert beziehungsweise funktionalisiert sein.

Seitens des Mobilfunktelefons 1 eines Nachrichtensenders 1 wird in bekannter Art und Weise eine mittels eines Nachrichtendienstes des Mobilfunknetzes 13, vorliegend SMS, übermittelbare Nachricht erzeugt und über das Mobilfunknetz 13 an mehrere Nachrichtenempfänger 6, 7 und 8 beziehungsweise dessen Engeräte 6, 7 und 8 gesendet. Die seitens des Mobilfunktelefons 1 des Nachrichtensenders 1 erzeugte Nachricht weist dabei für jeden Nachrichtenempfänger 6, 7 und 8 einen identischen Nachrichteninhalt und für jeden der Nachrichtenempfänger 6, 7 und 8 jeweils eine Information zur Kontaktierung des Nachrichtenempfänger 6, 7 beziehungsweise 8 in dem Mobilfunknetz 13 auf.

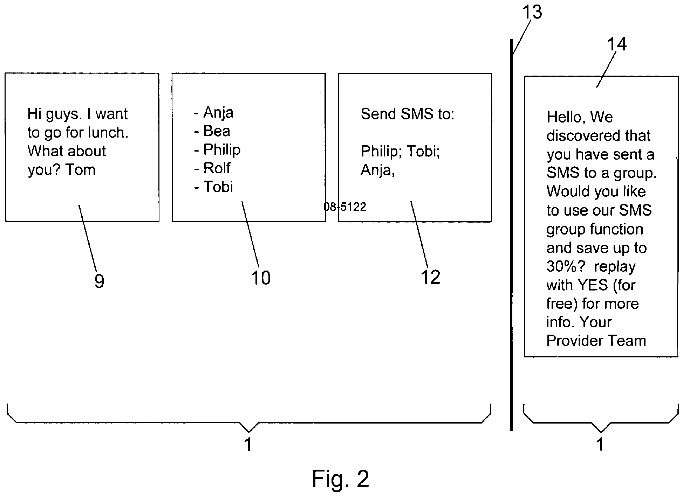

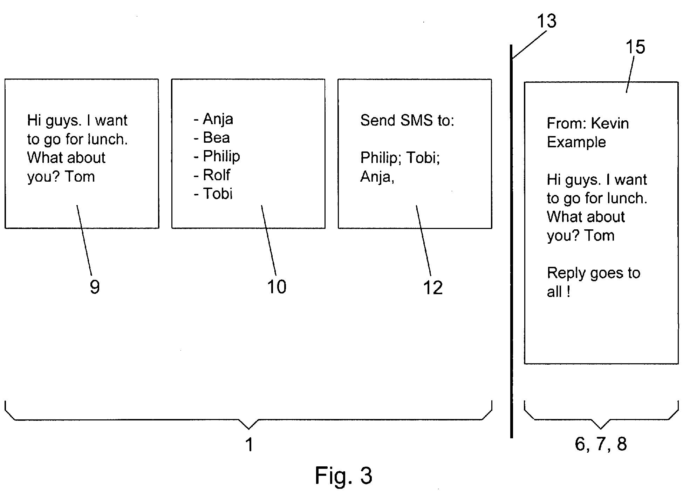

Fig. 2 und Fig. 3 zeigen ein Ausführungsbeispiel einer entsprechenden Nachrichtenerzeugung seitens des Mobilfunktelefons 1 eines Nachrichtensenders 1. Dabei wird seitens des Mobilfunktelefons 1 in Verfahrensschritt 9 mittels einer seitens des Mobilfunktelefons 1 ausgeführten Editoranwendung ein Nachrichteninhalt, vorliegend "Hi guys. I want to go for lunch. What about you? Tom", erzeugt. In Verfahrensschritt 10 werden aus einer seitens des Mobilfunktelefons 1 unterhaltenen Datenbank, vorliegend einem sogenannten PhoneBook, Kontaktinformationen möglicher Nachrichtenempfänger 6, 7 und 8, vorliegend deren Rufnummern (MSISDNs) im Mobilfunknetz 13 ausgewählt. Die aus Nachrichteninhalt und der Kontaktinformation der jeweiligen Nachrichtenempfänger 6, 7 und 8 bestehenden Nachrichten werden dann in Verfahrensschritt 12 von dem Mobilfunktelefon 1 an die jeweiligen Nachrichtenempfänger 6, 7 und 8, vorliegend "Philip", "Tom" und "Anja" gesendet. Dabei übermittelt das Mobilfunktelefon 1 die Nachrichten an das Mobilfunknetz 13.

Fig. 1 zeigt die Übermittlung der Nachrichten an die jeweiligen Nachrichtenempfänger 6, 7 und 8. Dabei sendet der Nachrichtensender 1 die Nachrichten von seinem Mobilfunktelefon 1 aus mittels des Nachrichtendienstes, vorliegend mittels SMS, an das Mobilfunknetz 13, vorliegend exemplarisch an den Router (ITP) 2 des Mobilfunknetzes 13.

Seitens des Routers/ITP 2 des Mobilfunknetzes 13 werden die Nachrichten an die Nachrichtenempfänger 6, 7 und 8 im Rahmen der Nachrichtenübermittlung im Mobilfunknetz 13 an die Recheneinrichtung 3 (SMSI) zur Detektierung einer Gruppennachricht übermittelt. Seitens der Recheneinrichtung 3 (SMSI) wird anhand der empfangenen Nachrichten erkannt wird, dass der Nachrichtensender 1 vorliegend innerhalb einer vorgebbaren Dauer nacheinander drei Nachrichten an unterschiedliche Nachrichtenempfänger 6, 7 und 8 sendet. Die Recheneinrichtung 3 (SMSI) erfasst dann die Länge und/oder den Inhalt der Nachrichteninhalte der Nachrichten. Bei identischer Länge und/oder Gleichheit der Nachrichteninhalte der Nachrichten erzeugt dann eine Recheneinrichtung 4 (GCAS) eine Information zur zumindest netzwerkseitigen Gruppierung des Nachrichtensenders 1 und der Nachrichtenempfänger 6, 7 und 8. Anschließend versieht die Recheneinrichtung 4 (GCAS) die Nachrichten mit der Gruppierungsinformation.

Die mit der Gruppierungsinformation versehenen Nachrichten werden unter Nutzung der Gruppierungsinformation und der Kontaktierungsinformation der jeweiligen Nachrichtenempfänger 6, 7 und 8 von der Recheneinrichtung 4 (GCAS) an die für die Nachrichtenübermittlung mittels des Nachrichtendienstes SMS im Mobilfunknetz 13 vorgesehene und eingerichtete Vermittlungseinrichtung 5 des Mobilfunknetzes 13, vorliegend ein SMSC 5, übermittelt. Von dem SMSC 5 des Mobilfunknetzes 13 werden die Nachrichten dann mit der Gruppierungsinformation an die Mobilfunktelefone 6, 7 und 8 der Nachrichtenempfänger 6, 7 und 8 weitergeleitet.

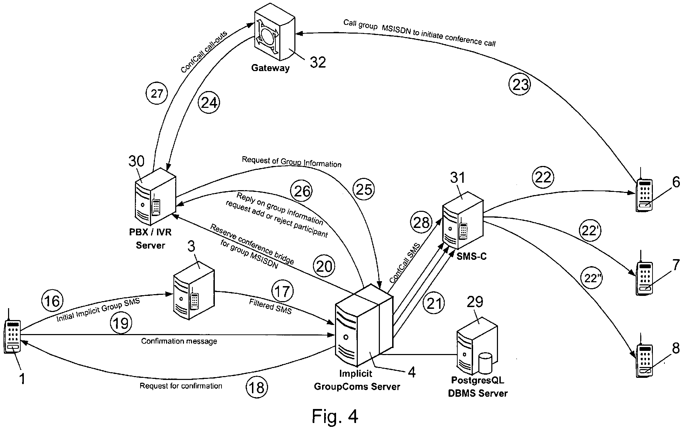

Die Gruppierungsinformation ist vorliegend eine Rufnummer MSISDN im Mobilfunknetz 13, welche das Mobilfunknetz 13 zur Verfügung stellt und die von auf die Nachricht antwortenden Nachrichtenempfängern 6, 7 oder 8 als zur Kontaktierung des Nachrichtensenders 1 und/oder anderer Nachrichtenempfänger 6, 7 oder 8 im Mobilfunknetz 13 nutzbar ist. Vorteilhafterweise ist ferner wenigstens ein Teil der Individualinformation eines Nachrichtenempfängers 6, 7, 8 und/oder des Nachrichtensenders 1 als Kontaktierungsinformation des Nachrichtenempfängers 6, 7, 8 und des Nachrichtensenders 1 nutzbar, insbesondere nach Erfassung der Individualinformationen von Nachrichtenempfängern 6, 7, 8 beziehungsweise des Nachrichtensenders 1 entsprechend den in den Figuren dargestellten Dialogen zur Erfassung von Individualinformationen der jeweiligen Nachrichtenempfänger 6, 7, 8 beziehungsweise des Nachrichtensenders 1.. Die Rufnummer der Gruppierungsinformation wird dabei, wie im Zusammenhang mit Fig. 4 noch näher erläutert, seitens des Telekommunikationsnetzes 13 zur Einrichtung einer Konferenzschaltung zwischen den Gruppenmitgliedern, also dem jeweiligen Nachrichtensender und/oder den jeweiligen Nachrichtenempfängern genutzt.

Die Nachrichtenübermittlung unter Nutzung der Gruppierungsinformation bewirkt dabei vorliegend eine gebührenreduzierte Abrechnung von Nutzungen des Nachrichtendienstes SMS des Mobilfunknetzes 13. Vorteilhafterweise wird dabei mit und/oder durch die Nutzung der Gruppierungsinformation eine entsprechende Abrechnungsinformation in dem sogenannten CDR (CDR: Call Detail Record) des Mobilfunknetzes 13 für die Rufnummern (MSISDNs) der beteiligten Gruppenkommunikationspartner 1, 6, 7 und 8 gesetzt beziehungsweise aktiviert.

Fig. 2 zeigt einen Dialog zwischen dem Mobilfunktelefon 1 und dem Mobilfunknetz 13 zur Aktivierung der Gruppenkommunikationsfunktionalität. Dabei sendet das Mobilfunknetz 13 an das Mobilfunktelefon 1 bei mobilfunknetzseitiger Detektierung einer zu übermittelnden Gruppennachricht durch die Recheneinrichtung 3 (SMSI) des Mobilfunknetzes 13 automatisch eine Nachricht, vorliegend "Hello. We discovered that you have sent a SMS to a group. Would you like to use ors SMS group function and save up to 30%? Replay with YES (for free) for more info. Your Provider Team", an das Mobilfunktelefon 1 zur Aktivierungsauswahl, wie in Fig. 2 durch den mit 14 gekennzeichneten Verfahrensschritt dargestellt.

Fig. 3 zeigt in Verfahrensschritt 15 den Empfang der mit der Gruppierungsinformation versehenen übermittelten Nachricht des Nachrichtensenders 1 ("Kevin"), vorliegend "From Kevin Example Hi guys. I want to go for lunch. What about you? Tom Reply goes to all!" seitens der jeweiligen Nachrichtenempfänger 6, 7 und 8. Auf die Nachricht können die Nachrichtenempfänger 6, 7 und 8 unter Nutzung der Gruppierungsinformation an die Kommunikationspartner, also dem Nachrichtensender 1 und den Nachrichtenempfängern 6, 7 oder 8, antworten und die so von dem Mobilfunknetz 13 angebotene Gruppierungsfunktionalität nutzen.

Die erfindungsgemäße Gruppierung ist vorliegend über zwei unterschiedliche Prozesse einleitbar. Zum einen wird bei einem Versenden einer Nachricht mittels des Nachrichtendienstes des Mobilfunknetzes 13, vorliegend einer SMS-Nachricht, an verschiedene Nachrichtenempfänger von einer netzwerkseitig in die Nachrichtenübermittlung dazwischen geschaltete Recheneinrichtung, vorliegend vorzugsweise einem Server, erkannt, dass es sich hierbei um eine an eine Gruppe gerichtete Nachricht (SMS) handelt. Die Nummern der Nachrichtenempfänger und des Nachrichtensenders werden automatisch zusammengefasst und zu einer Gruppe ausgebildet, wobei die Gruppe zur eindeutigen Identifizierung eine als Gruppierungsinformation genutzte Mobilfunkrufnummer, eine sogenannte Gruppenrufnummer, erhält. Mittels dieser Mobilfunkrufnummer (Gruppenrufnummer) ist dann eine eindeutige Zuordnung zu den Gruppenmitgliedern ermöglicht. Neben einer automatischen Gruppeninitiierung via SMS ist es ferner ermöglicht, eine Gruppe mit Hilfe eines Computerprogramms, welches Zugriff auf den Gruppenserver gestattet, zu bilden. Im Rahmen dieser Gruppierungsmöglichkeit können äußerst komfortabel Gruppenmitglieder mit ihren Mobilfunknummern eingegeben und unter einem Stichwort für eine spätere Verwendung gespeichert werden.

Fig. 4 zeigt die im Zusammenhang mit Fig. 1, Fig. 2 und Fig. 3 erläuterte Nachrichtenübermittlung im Zusammenhang mit einer erfindungsgemäßen Nutzung der Rufnummer der Gruppierungsinformation im Rahmen eines erfindungsgemäßen Aufbaus einer Gruppenkommunikation zwischen Teilnehmern, vorliegend für eine Konferenzschaltung zwischen Gruppenmitgliedern.

In Verfahrensschritt 16 sendet der Nachrichtensender 1 Nachrichten an die Recheneinrichtung 3 des Telekommunikationsnetzes 13. In Verfahrensschritt 17 wird anhand der seitens der Recheneinrichtung 4 des Telekommunikationsnetzes 13 von dem Nachrichtensender 1 empfangenen Nachrichten erkannt, dass der Nachrichtensender 1 innerhalb einer vorgebbaren Dauer nacheinander eine Nachricht mit identischer Länge und/oder gleichem Nachrichteninhalt an drei Nachrichtenempfänger 6, 7 und 8 senden möchte.

In Verfahrensschritt 18 sendet die Recheneinrichtung 4 über das Telekommunikationsnetz 13 eine Nachricht an den Nachrichtensender 1 mit dem Hinweis das die Möglichkeit einer Gruppennachrichtenversendung detektiert wurde und bittet um Bestätigung beziehungsweise Aktivierungsauswahl bezüglich einer erfindungsgemäßen Gruppierung. In Verfahrensschritt 19 sendet der Nachrichtensender 1 eine entsprechende Aktivierungsauswahl für eine erfindungsgemäße Gruppennachrichtenversendung über das Telekommunikationsnetz 13 an die Recheneinrichtung 3 beziehungsweise 4.

In Verfahrensschritt 20 wird für die für die Gruppe eingerichtete Rufnummer (MSISDN) der Gruppierungsinformation die Nutzungsmöglichkeit derselben für eine Konferenzschaltung in dem Telekommunikationsnetz 13 eingerichtet. Die Einrichtung der Nutzung der Gruppierungsinformation für die Konferenzschaltung erfolgt dabei über die Recheneinrichtung 4 beziehungsweise einer mit dieser verbundenen beziehungsweise verbindbaren weiteren Einrichtung 29, vorliegend einem Server (PostgresQL DBMS Server). Die Nutzungseinrichtung wird dabei in Verfahrensschritt 20 einer für die Umsetzung einer Konferenzschaltung eingerichteten Einrichtung 30, vorliegend einem Server (PBX/IVR Server) 30, mitgeteilt.

Die Nachricht des Nachrichtensenders 1 an die Nachrichtenempfänger 6, 7 und 8 wird seitens der Recheneinrichtung 4 des Telekommunikationsnetzes 13 mit der Gruppierungsinformation versehen. Anschließend wird in Verfahrensschritt 21 die mit der Gruppierungsinformation versehene Nachricht von der Recheneinrichtung 4 des Telekommunikationsnetzes 13 an eine für die Übermittlung von Nachrichten eingerichtete Einrichtung 31 des Telekommunikationsnetzes 13, vorliegend einem SMS-C, weitergeleitet. Die Einrichtung 31 (SMS-C) übermittelt die Nachricht dann unter Nutzung der Gruppierungsinformation und der Kontaktierungsinformation des jeweiligen Nachrichtenempfängers 6, 7 und 8 im Telekommunikationsnetz 13 in den Verfahrensschritten 22, 22' und 22" an die jeweiligen Nachrichtenempfänger 6, 7 und 8.

In Verfahrenschritt 23 wählt ein Gruppenmitglied, vorliegend der Nachrichtenempfänger 6, die Rufnummer (MSISDN) der Gruppierungsinformation für eine Sprachkommunikation im Rahmen einer Konferenzschaltung zwischen den Gruppenmitgliedern, also vorliegend dem Nachrichtensender 1 und den Nachrichtenempfängen 6, 7 und 8 an und initiiert damit den Aufbau einer Konferenzschaltung zwischen den Gruppenmitgliedern. Bei Anwahl der Rufnummer (MSISDN) der Gruppierungsinformation wird dabei seitens des Telekommunikationsnetzes 13 über eine Umsetzeinrichtung 32 des Telekommunikationsnetzes 13, einem sogenannten Gateway 32, an die für die Einrichtung und/oder Verwaltung der Konferenzschaltung seitens des Telekommunikationsnetzes 13 vorgesehene beziehungsweise eingerichtete Einrichtung 30 weitergeleitet (Verfahrensschritt 24).

Die Einrichtung 30 (Server (PBX/IVR Server) 30) fragt dann in Verfahrensschritt 25 bei der die Gruppierungsinformation verwaltenden Recheneinrichtung 4 unter Nutzung der Rufnummer (MSISDN) der Gruppierungsinformation nach der Gruppierungsinformation. In Verfahrensschritt 26 teilt die Recheneinrichtung 4 der Einrichtung 30 die Gruppierungsinformation, umfassend Informationen bezüglich der an der Konferenzschaltung zu beteiligenden Gruppenmitglieder, mit. Unter Nutzung der Informationen leitet die Einrichtung 30 des Telekommunikationsnetzes 13 dann den in Fig. 4 nicht weiter dargestellten Aufbau von Kommunikationsverbindungen für die Konferenzschaltung zwischen den jeweiligen Gruppenmitgliedern ein (Verfahrensschritt 27).

Alternativ kann die Konferenzschaltung in dem in Fig. 4 mit dem Bezugszeichen 28 versehenen Verfahrenschritt durch Versendung einer Nachricht (SMS) an die von dem Nachrichtenempfänger 6 zur Konferenzschaltung eingeladenen weiteren Gruppenmitglieder, vorliegend also dem Nachrichtensender 1 und den Nachrichtenempfängern 7 und 8, erfolgen. Die Nachricht (SMS) wird dabei unter Nutzung der Gruppierungsinformation und der jeweiligen Kontaktierungsinformation des Nachrichtensenders 1 und der Nachrichtenempfänger 7 und 8 von der Einrichtung 31 (SMS-C) an selbige gesendet. Die Versendung der Einladungsnachricht für die Konferenzschaltung ist in Fig. 4 nicht weiter dargestellt. Die weiteren Gruppenmitglieder, vorliegend der Nachrichtensender 1 und die Nachrichtenempfänger 7 und 8, können dann durch Anwahl der Rufnummer (MSISDN) der Gruppierungsinformation an der Konferenzschaltung teilnehmen. Der Aufbau von entsprechenden Kommunikationsverbindungen für die Konferenzschaltung zwischen den jeweiligen Gruppenmitgliedern ist in Fig. 4 nicht weiter dargestellt.

Die in den Figuren der Zeichnung dargestellten und in Zusammenhang mit diesen beschriebenen Ausführungsbeispiele der Erfindung dienen lediglich der Erläuterung der Erfindung und sind für diese nicht beschränkend.

### Bezugszeichenliste:

- 1: Nachrichtensender/Endgerät
- 2: Telekommunikationsnetz/Router (ITP)
- 3: Telekommunikationsnetz/SMSI
- 4: Telekommunikationsnetz/GCSA
- 5: Telekommunikationsnetz/SMSC
- 6: Nachrichtenempfänger/Endgerät
- 7: Nachrichtenempfänger/Endgerät
- 8: Nachrichtenempfänger/Endgerät
- 9: Verfahrensschritt/Editieren Nachrichteninhalt
- 10: Verfahrensschritt/Auswahl Nachrichtenempfänger
- 12: Verfahrensschritt/Nachrichtenübermittlung
- 13: Telekommunikationsnetz
- 14: Verfahrensschritt/Dialog (Einladung zur Gruppenfunktionalität)
- 15: Verfahrensschritt/Nachrichtenempfang
- 16: Verfahrensschritt Initiierung Gruppennachricht (Initial Implicit Group SMS)
- 17: Verfahrensschritt Bildung Gruppennachricht (Filtered SMS)
- 18: Verfahrensschritt Anforderung Bestätigung Gruppennachricht (Request for Confirmation)
- 19: Verfahrensschritt Bestätigung Gruppennachricht (Confirmation Message)
- 20: Verfahrensschritt Einrichtung Konferenzschaltung für Gruppierungsinformation (Reserve conference bridge for group MSISDN)
- 21: Verfahrensschritt/Einleitung Nachrichtenübermittlung
- 22: Verfahrensschritt/Nachrichtenübermittlung
- 22': Verfahrensschritt/Nachrichtenübermittlung
- 22": Verfahrensschritt/Nachrichtenübermittlung
- 23: Verfahrensschritt Anruf Einleitung Konferenzschaltung (Call group MSISDN to initiate conference call)
- 24: Verfahrensschritt Aufbau Konferenzschaltung
- 25: Verfahrensschritt Aufbau Konferenzschaltung (Request of Group Information))
- 26: Verfahrensschritt Aufbau Konferenzschaltung (Reply on group information; request add or reject participant)
- 27: Verfahrensschritt Aufbau Konferenzschaltung (ConfCall call-outs)
- 28: Verfahrenschritt Aufbau Konferenzschaltung (ConfCall SMS)
- 29: Einrichtung/PostgresQL DBMS Server
- 30: Einrichtung/PBX/IVR Server
- 31: Vermittlungseinrichtung/SMS-C
- 32: Umsetzeinrichtung/Gateway

## Patentansprüche

1. Verfahren zum Aufbau einer Gruppenkommunikation zwischen Teilnehmern in Telekommunikationsnetzen, wobei Teilnehmer zumindest zu Gruppenkommunikationszwecken telekommunikationsnetzseitig als Mitglied einer Gruppe zusammenfassbar sind, mit
wenigstens einer Datenbank mit wenigstens eine Kontaktierungsinformation zur Kontaktierung von möglichen Gruppenmitgliedern in einem Telekommunikationsnetz aufweisenden Datenbankeinträgen, und
wenigstens einer Gruppierungseinrichtung zur Zusammenstellung und/oder Koordination von Gruppenmitgliedern zu und/oder in einer Gruppe,
wobei einer Gruppierungsinformation zur zumindest telekommunikationsnetzseitigen Gruppierung von Gruppenmitgliedern zu einer Gruppe zumindest in der wenigstens einen Datenbank die wenigstens eine Kontaktierungsinformation von Gruppenmitgliedern der Gruppe im Telekommunikationsnetz zugeordnet wird,
wobei die Gruppierungsinformation eine eine Konferenzschaltung für eine Sprachkommunikation zwischen Gruppenmitgliedern der Gruppe ermöglichende Gruppenkontaktierungsinformation zur Kontaktierung der Gruppe in dem Telekommunikationsnetz ist, und
die Konferenzschaltung durch Anwahl der Gruppenkontaktierungsinformation der Gruppierungsinformation im Telekommunikationsnetz durch wenigstens ein Gruppenmitglied der Gruppe initiiert wird,
**dadurch gekennzeichnet, dass**
seitens eines Nachrichtensenders eine mittels eines Nachrichtendienstes eines Mobilfunknetzes übermittelbare Nachricht erzeugt und über das Mobilfunknetz an mehrere Nachrichtenempfänger gesendet wird, seitens einer netzwerkseitig in die Nachrichtenübermittlung dazwischen geschalteten Recheneinrichtung erkannt wird, dass es sich bei der von dem Nachrichtensender an die mehreren Nachrichtenempfänger gesendete Nachricht um eine an eine Gruppe gerichtete Nachricht handelt, und die Mobilfunkrufnummern der Nachrichtenempfänger und des Nachrichtensenders automatisch zusammengefasst und zu einer Gruppe ausgebildet werden, wobei die ausgebildete Gruppe zur eindeutigen Identifizierung eine als Gruppierungsinformation genutzte Mobilfunkrufnummer erhält.

2. Verfahren nach Anspruch 1, **dadurch gekennzeichnet, dass** die Konferenzschaltung automatisch durch eine seitens einer Recheneinrichtung des Telekommunikationsnetzes ausgeführte Anwendung initiiert wird, wobei die Anwendung von dem wenigstens einen Gruppenmitglied der Gruppe mittels eines über ein Kommunikationsnetz erfolgenden Dialogs zumindest hinsichtlich Zeitpunkt und/oder hinsichtlich der an der Konferenzschaltung beteiligten Gruppenmitglieder der Gruppe steuerbar ist.

3. Verfahren nach Anspruch 1 oder Anspruch 2, **dadurch gekennzeichnet, dass** zumindest die Initiierung der Konferenzschaltung den an der Konferenzschaltung beteiligten Gruppenmitgliedern der Gruppe signalisiert wird.

4. Verfahren nach Anspruch 3, **dadurch gekennzeichnet, dass** die Signalisierung mittels einer den an der Konferenzschaltung beteiligten Gruppenmitgliedern der Gruppe über das Telekommunikationsnetz gesendeten Nachricht eines Nachrichtendienstes des Telekommunikationsnetzes erfolgt.

5. Verfahren nach Anspruch 3 oder Anspruch 4, **dadurch gekennzeichnet, dass** die Gruppenmitglieder der Gruppe denen die Initiierung der Konferenzschaltung signalisiert wurde durch Anwahl der Gruppenkontaktierungsinformation der Gruppierungsinformation im Telekommunikationsnetz an der Konferenzschaltung teilnehmen.

6. Verfahren nach einem der Ansprüche 1 bis 5, **dadurch gekennzeichnet, dass** mit und/oder nach Initiierung der Konferenzschaltung die an der Konferenzschaltung beteiligten Gruppenmitglieder der Gruppe angerufen werden.

7. Verfahren nach Anspruch 6, **dadurch gekennzeichnet, dass** der Anruf von an der Konferenzschaltung beteiligten Gruppenmitgliedern der Gruppe dem jeweiligen Gruppenmitglied der Gruppe vor dem Anruf signalisiert wird und das Gruppenmitglied durch eine Eingabe den Anruf annimmt oder ablehnt.

8. Verfahren nach einem der Ansprüche 1 bis 7, **dadurch gekennzeichnet, dass** die Gruppenkontaktierungsinformation ein alphanumerisches Zeichen, umfassend wenigstens eine Ziffer, wenigstens einen Buchstaben und/oder wenigstens ein Sonderzeichen, ist.

9. Verfahren nach einem der Ansprüche 1 bis 8, **dadurch gekennzeichnet, dass** das Telekommunikationsnetz ein Mobilfunknetz gemäß einem GSM-, GPRS- und/oder UMTS-Funknetzstandard ist.

10. Verfahren nach Anspruch 9, **dadurch gekennzeichnet, dass** die Gruppenkontaktierungsinformation eine Rufnummer (MSISDN) im Mobilfunknetz ist.

11. Verfahren nach einem der Ansprüche 1 bis 10, **gekennzeichnet durch** eine Nutzung der Gruppierungsinformation zur Abrechnung von Nutzungen der Konferenzschaltung, vorzugsweise für eine gebührenreduzierte Abrechnung von Nutzungen der Konferenzschaltung.

12. Verfahren nach einem der Ansprüche 1 bis 11, **gekennzeichnet durch** einen im Rahmen der Erzeugung der Gruppierungsinformation zwischen dem Telekommunikationsnetzwerk und wenigstens einem Gruppenmitglied der Gruppe erfolgenden Dialog zum Aufbau und/oder zur Administrierung der Gruppierung.

13. Verfahren nach Anspruch 12, **dadurch gekennzeichnet, dass** der Dialog über eine Webschnittstelle (Web-Interface) mittels Fernverbindung erfolgt, vorzugsweise mittels eines Prozedur-Fernaufrufs (RPC: Remote-Procedure-Call) gemäß einem Client-Sen/er-Prinzip.

14. Verfahren nach Anspruch 12, **dadurch gekennzeichnet, dass** der Dialog mittels eines Nachrichtendienstes des Telekommunikationsnetzes erfolgt, vorzugsweise mittels eines Kurzmitteilungsdienstes (SMS).

15. Telekommunikationsnetz, vorzugsweise ein Mobilfunknetz gemäß einem GSM-, GPRS- und/oder UMTS-Funknetzstandard, welches zumindest an dem Aufbau einer Gruppenkommunikation in dem Telekommunikationsnetz beteiligt ist,
**dadurch gekennzeichnet, dass** dieses ausgebildet und/oder eingerichtet ist, die Verfahrensschritte nach einem Verfahren der Ansprüche 1 bis 14 auszuführen.

## Claims

1. A method for establishing a group communication between subscribers in telecommunication networks, wherein subscribers at least for group communication purposes can be collected together as members of a group on the side of a telecommunication network, comprising at least one data base comprising data base entries containing at least one contacting information item for contacting possible group members in a telecommunication network, and
at least one grouping device for collecting and/or coordinating group members of and/or in a group,
wherein a grouping information item will be allocated to the at least one contacting information item of group members of the group in the telecommunication network at least in the at least one data base for grouping of group members in a group at least on the side of the telecommunication network,
wherein the grouping information item is a group contacting information item for contacting the group in the telecommunication network enabling a teleconference for a voice communication between group members of the group, and
the teleconference will be initiated by selecting the group contacting information item of the grouping information item in the telecommunication network by at least one group member of the group,
**characterized in that**
a message that can be transmitted by a message service of a mobile radio network will be created by a message sender and be sent via the mobile radio network to several message receivers,
a computer unit that is switched in between the message transmission by the network recognizes that the message sent by the message sender to the several message receivers is a message addressed to a group, and
the mobile phone numbers of the message receivers and the message sender are automatically collected and used to establish a group, wherein the established group receives a mobile phone number used as grouping information item for a clear identification.

2. A method according to claim 1, **characterized in that** the teleconference will be automatically initiated by an application that is executed by means of a computer unit of the telecommunication network, wherein the application can be controlled by the at least one group member of the group by means of a dialogue, which takes place via a communication network, at least with respect to the time and/or with respect to the group members of the group taking part in the teleconference.

3. A method according to claim1 or claim 2, **characterized in that** at least the initiation of the teleconference is signalized to the group members of the group taking part in the teleconference.

4. A method according to claim 3, **characterized in that** the signalization is carried out by means of a message of a message service of the telecommunication network, which message is sent via the telecommunication network to the group members of the group taking part in the teleconference.

5. A method according to claim 3 or claim 4, **characterized in that** the group members of the group, to whom the initiation of the teleconference has been signalized, will take part in the teleconference by selecting the group contacting information item of the grouping information item in the telecommunication network.

6. A method according to one of the claims 1 to 5, **characterized in that** the group members of the group taking part in the teleconference are called upon and/or after the initiation of the teleconference.

7. A method according to claim 6, **characterized in that** the calling of group members of the group taking part in the teleconference is signalized to the respective group member of the group before the call and the group member accepts or refuses the call by making an input.

8. A method according to one of the claims 1 to 7, **characterized in that** the group contacting information item is an alphanumeric character comprising at least one number, at least one letter and/or at least one special character.

9. A method according to one of the claims 1 to 8, **characterized in that** the telecommunication network is a mobile radio network according to a GSM, GPRS and/or UMTS radio network standard.

10. A method according to claim 9, **characterized in that** the group contacting information item is a call number (MSISDN) in the mobile radio network.

11. A method according to one of the claims 1 to 10, **characterized by** a utilization of the grouping information item for billing utilizations of the teleconference, preferably a fee-reduced billing of utilizations of the teleconference.

12. A method according to one of the claims 1 to 11, **characterized by** a dialogue between the telecommunication network and at least one group member of the group within the scope of the generation of the grouping information item for establishing and/or administrating the grouping.

13. A method according to claim 12, **characterized in that** the dialogue will take place over a web interface by means of a remote connection, preferably by means of a remote procedure call (RPC: Remote-Procedure-Call) according to a client-server principle.

14. A method according to claim 12, **characterized in that** the dialogue is realized by means of a message service of the telecommunication network, preferably by means of a short message service (SMS).

15. A telecommunication network, preferably a mobile radio network according to a GSM, GPRS and/or UMTS radio network standard, which takes at least part in establishing a group communication in the telecommunication network,
**characterized in that** this one is designed and/or adapted to carry out the process steps according to a method of the claims 1 to 14.

## Revendications

1. Procédé d'établissement d'une communication de groupes entre des abonnés dans des réseaux de télécommunication, des abonnés pouvant être rassemblés comme des membres d'un groupe par le réseau de télécommunication au moins pour des buts de communication de groupes, comprenant
au moins une base de donnés comprenant des entrées de base de données contenant au moins une information de mise en contact pour contacter des membres de groupe possibles dans un réseau de télécommunication, et
au moins un dispositif de groupement pour rassembler et/ou coordonner des membres de groupe pour et/ou dans un groupe,
dans lequel l'au moins une information de mise en contact de membres de groupe du groupe dans le réseau de télécommunication est attribuée à une information de groupement pour le groupement de membres de groupe dans un groupe par au moins le réseau de télécommunication au moins dans l'au moins une base de données, l'information de groupement étant une information de mise en contact de groupe pour contacter le groupe dans le réseau de télécommunication et permettant d'établir une conférence téléphonique pour une communication vocale entre des membres de groupe du groupe, et
la conférence téléphonique étant initiée par la sélection de l'information de mise en contact de groupe de l'information de groupement dans le réseau de télécommunication par au moins un membre de groupe du groupe,
**caractérisé en ce que**
un message pouvant être transmis par moyen d'un service de messages d'un réseau radio mobile est généré par un émetteur de message et envoyé à plusieurs récepteurs de message via le réseau radio mobile,
une unité d'ordinateur branchée par le réseau dans la transmission de message reconnaît que le message envoyé par l'émetteur de message à plusieurs récepteurs de message est un message adressé à un groupe, et les numéros de portable des récepteurs de message et de l'émetteur de message sont automatiquement rassemblés et collectés dans un groupe, le groupe formé recevant un numéro de portable utilisé comme une information de groupement pour l'identification univoque.

2. Procédé selon la revendication 1, **caractérisé en ce que** la conférence téléphonique est automatiquement initiée par une application exécutée par une unité d'ordinateur du réseau de télécommunication, l'application pouvant être commandée par l'au moins un membre de groupe du groupe par moyen d'un dialogue, qui a lieu via un réseau de communication, au moins par rapport au moment et/ou par rapport aux membres de groupe du groupe, qui participent à la conférence téléphonique.

3. Procédé selon la revendication 1 ou la revendication 2, **caractérisé en ce qu'**au moins l'initiation de la conférence téléphonique est signalée aux membres de groupe du groupe, qui participent à la conférence téléphonique.

4. Procédé selon la revendication 3, **caractérisé en ce que** la signalisation se fait par moyen d'un message d'un service de messages du réseau de télécommunication, le message étant envoyé via le réseau de télécommunication aux membres de groupe du groupe, qui participent à la conférence téléphonique.

5. Procédé selon la revendication 3 ou la revendication 4, **caractérisé en ce que** les membres de groupe du groupe, à qui l'initiation de la conférence téléphonique a été signalé, participent à la conférence téléphonique par sélection de l'information de mise en contact de groupe de l'information de groupement dans le réseau de télécommunication.

6. Procédé selon l'une des revendications 1 à 5, **caractérisé en ce que** les membres de groupe du groupe, qui participent à la conférence téléphonique, sont appelés pendant et/ou après l'initiation de la conférence téléphonique.

7. Procédé selon la revendication 6, **caractérisé en ce que** l'appel des membres de groupe du groupe, qui participent à la conférence téléphonique, est signalé au membre de groupe respectif du groupe avant l'appel et le membre de groupe accepte ou refuse l'appel par moyen d'une entrée.

8. Procédé selon l'une des revendications 1 à 7, **caractérisé en ce que** l'information de mise en contact de groupe est un signe alphanumérique comprenant au moins un chiffre, au moins une lettre et/ou au moins un caractère spécial.

9. Procédé selon l'une des revendications 1 à 8, **caractérisé en ce que** le réseau de télécommunication est un réseau radio mobile selon un standard de réseau radio GSM, GPRS et/ou UMTS.

10. Procédé selon la revendication 9, **caractérisé en ce que** l'information de mise en contact de groupe est un numéro d'appel (MSISDN) dans le réseau radio mobile.

11. Procédé selon l'une des revendications 1 à 10, **caractérisé par** une utilisation de l'information de groupement pour la facturation des utilisations de la conférence téléphonique, de préférence pour une facturation des utilisations à frais réduits de la conférence téléphonique.

12. Procédé selon l'une des revendications 1 à 11, **caractérisé par** un dialogue tenu entre le réseau de télécommunication et au moins un membre de groupe du groupe dans le cadre de la génération de l'information de groupement pour établir et/ou gérer le groupement.

13. Procédé selon la revendication 12, **caractérisé en ce que** le dialogue se fait via une interface Web (web interface) par moyen d'une connexion à distance, de préférence par moyen d'une procédure d'appel à distance (RPC = Remote-Procedure-Call) selon un principe client-serveur.

14. Procédé selon la revendication 12, **caractérisé en ce que** le dialogue se fait par moyen d'un service de messages du réseau de télécommunication, de préférence par moyen d'un service de messages courts (SMS).

15. Réseau de télécommunication, de préférence un réseau radio mobile selon un standard de réseau radio GSM, GPRS et/ou UMTS, qui participe à l'établissement d'une communication de groupes dans le réseau de télécommunication,
**caractérisé en ce que**
celui-ci est configuré et/ou adapté à exécuter les étapes de procédé selon un procédé des revendications 1 à 14.
